# EUROPÄISCHE PATENTSCHRIFT

(11) **EP 2 838 860 B1**
(45) Veröffentlichungstag und Bekanntmachung des Hinweises auf die Patenterteilung: **12.02.2020**
(21) Anmeldenummer: 13717776.2
(22) Anmeldetag: 19.04.2013
(51) Int. Cl.: C03C 17/42, F24C 15/02, F24C 15/10, C03C 17/34

(54) **MIT EINER DEKORATIVEN BESCHICHTUNG VERSEHENES GLAS- ODER GLASKERAMIKSUBSTRAT SOWIE VERFAHREN ZU DESSEN HERSTELLUNG**
GLASS OR GLASS CERAMIC SUBSTRATE PROVIDED WITH A DECORATIVE COATING AND METHOD FOR THE PRODUCTION THEREOF
SUBSTRAT DE VERRE OU DE VITROCÉRAMIQUE DOTÉ D'UN REVÊTEMENT DÉCORATIF ET SON PROCÉDÉ DE RÉALISATION

(30) Priorität: 20.04.2012 DE 102012103507; 15.10.2012 DE 102012109808
(43) Veröffentlichungstag der Anmeldung: 25.02.2015
(73) Patentinhaber: SCHOTT AG, 55122 Mainz (DE)
(72) Erfinder: KNOCHE, Silke, 55291 Saulheim (DE); MILANOVSKA, Angelina, 55120 Mainz (DE); KLIPPE, Lutz, 65185 Wiesbaden (DE); HOFFMANN, Ulf, 64319 Pfungstadt (DE); RUHL, Ella, 55545 Bad Kreuznach (DE)
(74) Vertreter: Blumbach · Zinngrebe Patentanwälte PartG mbB
(86) Internationale Anmeldenummer: PCT/EP2013/058224
(87) Internationale Veröffentlichungsnummer: WO 2013/156622

(56) Entgegenhaltungen:
- EP-A2- 1 416 227
- WO-A1-2007/104752
- WO-A1-2012/004337
- JP-A- 2011 216 457

## Beschreibung

### Gebiet der Erfindung:

Die Erfindung betrifft ein Verfahren zur Herstellung einer dekorativen Beschichtung auf einem Glas- oder Glaskeramiksubstrat sowie ein verfahrensgemäß hergestelltes Glas- oder Glaskeramiksubstrat. Insbesondere betrifft die Erfindung eine Kochfläche aus Glaskeramik mit einer Unterseitenbeschichtung.

### Hintergrund der Erfindung:

Glas- sowie Glaskeramiksubstrate mit einer dekorativen Beschichtung sind aus der Praxis bekannt. Problematisch bei derartigen Beschichtungen ist, dass das Schichtsystem hohen thermischen Belastungen ausgesetzt wird. So müssen beim Einsatz für Induktions-Kochflächen die Beschichtungen Temperaturen von bis zu 500 °C gewachsen sein.

Aus der Praxis bekannt, ist bereits eine Mehrzahl von Möglichkeiten, wie derartige Beschichtungen aufgebracht werden können.

Bekannt sind zum einen mittels eines PVD-Verfahrens abgeschiedene metallische Schichten, diese werden insbesondere mittels Sputtern aufgebracht. Gesputterte Schichten haben eine hohe Brillanz und erwecken den optischen Eindruck von Metall.

Nachteilig ist allerdings, dass das Aufsputtern von metallischen Schichten recht aufwendig ist. Insbesondere sind, wenn beispielsweise zur Markierung von Kochzonen das Substrat nur teilweise mit einer dekorativen Schicht versehen werden soll, zusätzliche Verfahrensschritte zur Maskierung notwendig.

Ein weiterer Nachteil ist darin begründet, dass es nur wenige Möglichkeiten gibt, den optischen Eindruck der Schicht zu variieren, insbesondere hinsichtlich der gewünschten Farbe. So ist es beispielsweise sehr aufwändig, schwarze Schichten mittels eines Sputterverfahrens aufzubringen.

Häufig liegt ein weiterer Nachteil in der Leitfähigkeit der Schichten, sodass diese oft nicht geeignet sind, um vor kapazitiven Schaltern angeordnet zu sein.

Weiter aus der Praxis bekannt sind dekorative Beschichtungen auf Basis von Silikonfarben. Diese lassen sich zwar beispielsweise mittels Siebdruck relativ einfach aufbringen. Die mechanische Belastbarkeit derartiger Schichten ist allerdings in der Regel begrenzt, zudem kann es bei hoher Temperaturbelastung zu Verfärbungen der Beschichtung kommen.

Weiter bekannt ist das Aufbringen von dekorativen Beschichtungen mittels Glasfluss, also von Emaillebeschichtungen. Derartige Emaillebeschichtungen haben den Vorteil, dass über die Auswahl der verwendeten Pigmente, die dem Glasflussmaterial hinzugesetzt werden, eine nahezu beliebige Farbe hergestellt werden kann. Bekannte glasflussbasierte Beschichtungen sind allerdings in der Regel nur mit einer begrenzten Schichtdicke und der daraus resultierenden Blickdichte applizierbar und neigen zu Rissbildungen, die sich auf den optischen Eindruck der Schicht deutlich auswirken. Weiter setzen bekannte Emailleschichten das verwendete Substrat unter Zugspannung und verringern somit dessen Festigkeit.

Um eine Rissbildung zu vermeiden und die mechanische Belastbarkeit des hergestellten Verbundmaterials zu verbessern, ist es bekannt, poröse Emailleschichtungen aufzubringen. Diese haben aber wiederum den Nachteil, dass die Poren im Bereich der Wellenlänge des sichtbaren Lichtes liegen, sodass es zu einer matten Anmutung kommt.

Das Dokument EP 1 435 759 B1 beschreibt ein Verfahren zum Aufbringen einer dekorativen Beschichtung auf einem Kochfeld, wobei auf der Oberseite eine dichte Schicht mit anorganischen Pigmenten und auf der Unterseite eine poröse Schicht mit anorganischen Pigmenten aufgebracht wird. Risse in der unteren Schicht sollen unbedingt vermieden werden.

Mechanisch- und temperaturstabile, glänzende Emailleschichten für Kochfelder lassen sich bislang nicht herstellen.

EP 1 416 227 A2 offenbart ein Verfahren zur Herstellung einer Glaskeramik-Platte, wobei die Glaskeramik-Platte eine Emailleschicht beinhaltend Pigment-Partikel aufweist, wobei eine Deckschicht auf die Emaillebeschichtung aufgebracht wird.

JP2011216457 A offenbart ein Verfahren zur Herstellung von Kochflächen, die ein Substrat, eine Emailleschicht und eine Silikonharzschicht aufweisen. Die Emailschicht und die Silikonharzschicht weisen Pigmente auf.

Weiter bekannt sind mittels eines Sol-Gel Verfahrens hergestellte Beschichtungen, wobei dem Sol-Gel Material mindestens ein Pigment oder Füllstoff hinzugesetzt wird. Derartige Sol-Gel Schichten neigen aber ebenfalls in vielen Fällen zur Delamination oder zu Rissbildungen, was sich sodann als lokale Aufhellung auf dem Verbundmaterial bemerkbar macht.

Weiter ist das Aufbringen von Lüsterfarben als dekorative Beschichtung bekannt. Lüsterfarben haben wiederum den Nachteil, dass die Auswahl des Farbortes eingeschränkt ist sowie dass zumindest bei dunklen, insbesondere schwarzen Beschichtungen, auf edelmetallbasierte Farben zurückgegriffen werden muss, was die Herstellungskosten erhöht.

### Aufgabe der Erfindung:

Der Erfindung liegt demgegenüber die Aufgabe zugrunde, ein Verfahren zum Aufbringen einer dekorativen Beschichtung für Glas oder Glaskeramiksubstrate bereit zu stellen, mittels dessen auf einfache Weise das Substrat mit einer hitzebeständigen Schicht versehen werden kann.

Es ist insbesondere eine Aufgabe der Erfindung, es zu ermöglichen, den Farbort der Beschichtung frei zu wählen und eine glänzende Schicht aufzubringen.

### Zusammenfassung der Erfindung:

Die Aufgabe der Erfindung wird bereits durch ein Verfahren zum Aufbringen einer dekorativen Beschichtung auf ein Glas-oder Glaskeramiksubstrat sowie durch ein beschichtetes Glas- oder Glaskeramiksubstrat nach einem der unabhängigen Ansprüche gelöst.

Bevorzugte Ausführungsformen und Weiterbildungen der Erfindung sind den jeweiligen Unteransprüchen zu entnehmen.

Die Erfindung betrifft ein Verfahren zum Aufbringen einer dekorativen Beschichtung auf ein Glas- oder Glaskeramiksubstrat.

Unter einer dekorativen Beschichtung wird jede Beschichtung verstanden, welche den optischen Eindruck des Substrats ändert. Vorzugsweise ist die Beschichtung opak oder semitransparent. Die Beschichtung kann eine beliebige Farbe haben.

Als Glas- oder Glaskeramiksubstrat wird vorzugsweise ein transparentes und/oder hitzebeständiges Material verwendet. Neben Glaskeramiken, welche auch als sogenanntes Nullausdehnungsmaterial bezeichnet werden, ist es auch denkbar, die Erfindung für hitzebeständige Gläser zu verwenden. Im Falle der Verwendung für eine Kochfläche wird aber in der Regel ein Glaskeramiksubstrat verwendet. Unter einem transparenten Substrat werden Substrate verstanden die im sichtbaren Bereich zumindest teildurchlässig sind.

Das Substrat ist vorzugsweise eben ausgebildet. Denkbar ist aber auch die Erfindung für gebogene Substrate zu verwenden, wie diese beispielsweise für Kaminsichtscheiben verwendet werden.

Gemäß der Erfindung wird mittels eines Glasflusses zunächst eine erste Schicht mit einer strukturierten Oberfläche aufgebracht. Unter einer strukturierten Oberfläche wird eine Oberfläche mit einem Oberflächenrelief verstanden. Die aufgebrachte Schicht ist also nicht eben, sondern weist Täler und Berge auf. Die Strukturtiefe liegt vorzugsweise im Mikrometerbereich. Insbesondere ist eine maximale Strukturtiefe von 0,1 bis 5 µm, bevorzugt von 0,2 bis 3 µm und besonders bevorzugt von 0,5 bis 2 µm vorgesehen.

Die Strukturtiefe kann beispielsweise ermittelt werden, indem auf einem Mustermaterial das Oberflächenprofil entlang 10 zufällig ausgewählter 1 cm langer Teststrecken vermessen wird, beispielsweise rasterelektronenmikroskopisch.

Der Durchschnittswert der dabei ermittelten 10 maximalen Höhenunterschiede gibt die maximale Strukturtiefe im Sinne der Erfindung wieder.

Eine derart strukturierte Oberfläche wird dadurch erreicht, dass dem für die Beschichtung verwendeten Material Pigment- und/oder Füllstoffpartikel zugesetzt werden, wie im Folgenden noch ausführlich erläutert werden wird.

Auf die strukturierte erste Schicht wird eine weitere Schicht aufgebracht, welche die strukturierte Oberfläche zumindest teilweise auffüllt, besonders bevorzugt vollständig auffüllt, so dass das Schichtmaterial der ersten Schicht graduell zum Material der zweiten Schicht übergeht. Denkbar ist auch, die erste Schicht nur bereichsweise mit dem Schichtmaterial der zweiten Schicht aufzufüllen.

Durch das erzeugte Berg-Tal-Profil, welches von dem Material der zweiten Schicht aufgefüllt wird, ändert sich die Materialzusammensetzung des aus beiden Materialien bestehenden Schichtsystems ausgehend vom Substrat bis hin zur Schichtoberfläche, derart, dass an der Oberfläche des Substrats ein höherer Anteil des Materials der ersten Schicht vorhanden ist (bevorzugt annähernd 100%), wohingegen an der Oberfläche des Schichtsystems ein geringerer Anteil des Materials der ersten Schicht vorliegt (bevorzugt annähernd 0%).

Die Erfinder haben herausgefunden, dass bei thermischer Belastung das entstandene Schichtsystem weit weniger zu deutlich sichtbaren Veränderungen, insbesondere zu hellen Flecken aufgrund von Rissen, neigt.

Dies ist möglicherweise darauf zurückzuführen, dass selbst bei in der ersten Schicht entstehenden Rissen diese in der Regel von der zweiten Schicht kaschiert werden, sodass trotz einer vorhandenen Rissbildung es nicht zu den eingangs erwähnten Inhomogenitäten des optischen Erscheinungsbildes kommt.

Weiter können durch eine gezielte Rissbildung sogar Zonen mit einer erhöhten Temperaturbeständigkeit entstehen, die dazu führen, dass das gesamte Schichtsystem eine höhere Temperaturbeständigkeit hat. Dies gilt bei einer mittels Glasfluss hergestellten ersten Schicht, auf welche eine Polymerschicht aufgebracht wird.

Es versteht sich, dass im Sinne der Erfindung auch noch weitere Schichten vorhanden sein können. Insbesondere sind weitere Deck- und Versiegelungsschichten denkbar.

Auch ist es, wie es bei einer weiteren Ausführungsform der Erfindung vorgesehen ist, denkbar, das Schichtsystem, bestehend aus der ersten und der weiteren Schicht, auf eine Schicht mit einer hohen Strukturtiefe von mehreren µm aufzubringen. Dies kann insbesondere eine mittels eines Sol-Gel-Verfahrens aufgebrachte Schicht sein. Über eine derartige weitere strukturierte Schicht mit hohen Strukturtiefen von vorzugsweise über 10 µm lassen sich beispielsweise Muster, haptische Griffflächen etc. erzeugen. Diese können insbesondere auch auf der Unterseite eines Substrats, insbesondere eines Kochfeldes angeordnet sein.

Vorzugsweise umfasst das Material der ersten und/oder zweiten Schicht Pigmente, insbesondere zu einem Anteil von mehr als 50 % (%-Angaben, soweit nicht anders angegeben immer in Gewichtsprozent).

Insbesondere als erste Schicht wird vorzugsweise eine Schicht mit einem hohem Pigmentanteil von mehr als 60 % verwendet.

Als Pigmente werden vorzugsweise Metalloxyde verwendet. Dies können insbesondere sein: Cobalt-Oxide / -Spinelle, Cobalt-Aluminium-Spinelle, Cobalt-Titan-Spinelle, Cobalt-Chrom-Spinelle, Cobalt-Nickel-Mangan-Eisen-Chrom-Oxide /-Spinelle, Cobalt-Nickel-Zink-Titan-Aluminium-Oxide / - Spinelle, Eisen-Oxide, Eisen-Chrom-Oxide, Eisen-Chrom-Zink-Titan-Oxid, Kupfer-Chrom-Spinelle, Nickel-Chrom-Antimon-Titan-Oxide, Titan-Oxide, Zirkon-Silizium-Eisen-Oxide /-Spinelle etc.

Als Pigmente kommen auch alle denkbaren Absorptionspigmente in Betracht, insbesondere plättchen- oder stäbchenförmige Pigmente. Auch ist es möglich, beschichtete Effektpigmente zu verwenden.

Weiter können insbesondere der ersten Schicht auch Füllstoffe hinzugesetzt werden, dies können insbesondere sein: SiO₂-Partikel, Alumina-Partikel, pyrogene Kieselsäuren, Kalk-Natron-, Alkali-Alumosilicat- od. Borosilicatglaskugeln, Glashohlkugeln.

In Verbindung mit einem hohen Anteil an Pigmentpartikeln und/oder Füllstoffen entsteht eine Schicht mit hoher Strukturtiefe.

Dabei wird vorzugsweise die Schicht bei einer derart hohen Temperatur eingebrannt, dass die Glasflusspartikel schmelzen, wobei die Füllstoff und/oder Pigmentpartikel im Wesentlichen erhalten bleiben, um so eine dichte Schicht mit hoher Strukturtiefe zu erhalten.

Unter einer dichten Schicht wird insbesondere eine Schicht mit einer geschlossenen Porosität von weniger als 5 % verstanden.

Es entsteht so insbesondere eine semitransparente, rauhe erste Schicht, die mit einer Polymerschicht als weitere Schicht aufgefüllt wird, um insgesamt ein eine opake glänzende Unterseitenbeschichtung bereit zu stellen. Denkbar ist auch, die weitere Schicht abschnittsweise auszusparen, um in dem ausgesparten Bereich eine semitransparente Fläche zu erhalten. Dieser semitransparente Bereich kann insbesondere zur Integration eines Displays dienen. Besonders die Verwendung eines Siebdruckverfahrens zum Aufbringen der weiteren Schicht ermöglicht eine einfache Herstellung von ausgesparten Bereichen.

Es versteht sich, dass der ausgesparte Bereich dennoch weitere dritte Schichtmaterialien enthalten kann.

So ist beispielsweise denkbar, im ausgesparten Bereich auf die erste Schicht eine transparente Polymerschicht aufzubringen. Weiter ist denkbar, eine semitransparente Schicht aufzubringen, welche andere Farbstoffe als die ausgesparte weitere Schicht enthält. So bleibt der ausgesparte Bereich semitransparent und kann von der optischen Anmutung her dem angrenzenden Schichtsystem angepasst werden.

Die Schichtdicke der ersten Schicht beträgt vorzugsweise zwischen 0,1 und 10 µm, besonders bevorzugt zwischen 1 und 5 µm. Die weitere Schicht hat vorzugsweise eine Dicke zwischen 1 µm und 100 µm.

Die maximale Strukturtiefe der ersten Schicht beträgt mehr als 40 %, bevorzugt mehr als 80 % und besonders bevorzugt mehr als 90 % der Maximalschichtdicke.

Als Glasflussmaterial der ersten Schicht können kristalline oder glasige anorganische Materialien verwendet werden.

Das Glasflussmaterial wird vorzugsweise in partikulärer Form bereitgestellt und mit den Pigment- und/oder Füllstoffpartikeln gemischt.

Vorzugsweise werden Silikatgläser wie Borosilikatgläser, Zink-Borosilikatgläser, Bismut-Borosilikatgläser, Siliziumoxidgläser,Zink-Silikatgläser, Bismut-Silikatgläser, Alumosilikatgläser, Invertgläser oder auch Borat- und Phosphatgläser wie Zink-Boratgläser, Bismut-Boratgläser davon verwendet.

Die erste Schicht wird vorzugsweise bei einer Temperatur von mehr als 500 °C, besonders bevorzugt von mehr als 600 °C, eingebrannt.

Unter "Einbrennen" im Sinne der Erfindung wird verstanden, dass das Schichtmaterial verfestigt wird. Im Falle eines Glasflusses wird insbesondere das Material bei einer derart hohen Temperatur eingebrannt, dass das Glasflussmaterial schmilzt und nicht lediglich versintert.

Die Erwärmung erfolgt vorzugsweise derart schnell und kurz, dass das Glasflussmaterial sich verdichtet, ohne Verdampfungsprozesse stattfinden zu lassen, die eine Porenbildung verursachen können. Das Glasflussmaterial muss aber derart dünnflüssig sein, dass es die gesetzten Pigmentpartikel und/oder Füllstoffe vollständig benetzt.

Als Schichtmaterial der weiteren Schicht wird ein Polymer verwendet. Insbesondere kann ein Polysiloxan, Polysilsesquioxan, Polyurethan, epoxy- und/oder polyesterfunktionalisierte Silikonharze oder Sol-Gel verwendet werden.

Die weitere Schicht ist mit Pigmenten und/oder Farbstoffen, insbesondere mit Füllstoffen versetzt.

Als Füllstoffe werden insbesondere Silica-Partikel, Alumina-Partikel, pyrogene Kieselsäuren, Kalk-Natron-, Alkali-Alumosilicat- oder Borosilicatglaskugeln, Glashohlkugeln verwendet.

Als Pigmente kommen alle denkbaren Absorptionspigmente in Betracht, insbesondere plättchen- oder stäbchenförmige Pigmente.

Auch ist denkbar, beschichtete Effektpigmente zu verwenden.

Als Farbstoffe können alle organischen Farbstoffe verwendet werden, die hinreichend temperaturstabil sind.

Insbesondere für den Displaybereich kann transparentes Schichtmaterial für die zweite Schicht verwendet werden, das aber auch zur Verringerung des Farbkontrastes zwischen dem blickdichten Teil und dem Displaybereich eingefärbt sein kann. Zum Einfärben der Schicht können verschiedene Farbmittel verwendet werden, welche eine semitransparente Beschichtung mit geringer Streuung gewährleisten.

So können dem Schichtmaterial organische Farbstoffe zugegeben werden. Für eine dunkle bzw. schwarze Beschichtung kann insbesondere Orasol® RLi verwendet werden. Als temperaturbeständige Farbstoffe eignen sich weiterhin Azofarbstoffe wie Methylorange, Alizaringelb oder Kongorot; Triphenylmethanfarbstoffe wie Malachitgrün, Eosin, Fluoreszein, Aurin und Phenolphthalein; Küpenfarbstoffe wie Anthrachinon-Farbstoffe, Indigo und Thioindigo; Fluoreszenzfarbstoffe; Perylenfarbstoffe.

Ebenfalls können Phthalocyanine mit z.B. Cr, Cu, Ni, Zn oder Co als Zentralatom zum Einsatz kommen.

Die Verwendung einer polymeren Schicht, welche durch Auffüllen der Struktur der ersten Schicht ein Schichtsystem mit einer graduellen Stoffzusammensetzung ausbildet resultiert in einem dichten, gegebenenfalls glänzenden, thermisch hoch belastbaren Schichtsystem. Diese resultierende Gradientenschicht weist eine Porosität von < 7 Vol.-% auf und ist somit dicht. Im Querschliff lässt sich dieser Wert ermitteln. In der Stickstoffsorption nach BET werden Oberflächen des Schichtsystems von < 5m²/g gemessen, was wiederum ein Beweis für einen dichten Gradientenverbund ist.

Durch die Erfindung ist es insbesondere gelungen, auf sehr einfache Weise schwarze glänzende Schichten zu erzeugen, welche thermisch hoch belastbar sind. Die Schichten sind insbesondere einer Kurzzeittemperaturbelastung von über 500 °C und einer Langzeitbelastung von über 400 °C gewachsen.

Überraschenderweise können schwarze Schichten dadurch erzeugt werden, dass eine erste und weitere Schicht miteinander kombiniert werden, die einzeln aufgebracht, jeweils eine Helligkeit L im Lab-Farbraum von mehr als 29,0 aufweisen. Es handelt sich dabei also um eher graue Schichten, die nicht den gewünschten schwarzen Farbeindruck haben.

Überraschenderweise resultiert eine Kombination dieser Schichten in einer Helligkeit L von unter 28,0, insbesondere von unter 27,0.

Derart dunkle hitzebeständige Schichten konnten in der Vergangenheit nur durch die Verwendung von hochpreisigen Edelmetalloxyden bereitgestellt werden, die zudem eine leicht bräunliche Farbabweichung aufwiesen.

Das Aufbringen des Schichtmaterials der ersten und/oder weiteren Schicht erfolgt vorzugsweise mittels eines Druckverfahrens, insbesondere mittels Siebdruck.

So ist es auf sehr einfache und schnelle Weise möglich, auch großflächige Substrate vollständig zu beschichten.

Gleichzeitig ermöglicht die Verwendung eines Siebdruckverfahrens eine nur teilweise Beschichtung des Substrats. Es können also nur bestimmte Bereiche bedruckt werden, wobei andere Bereiche ausgelassen werden. Insbesondere können bei einem Kochfeld die Displaybereiche oder auch Kochflächen ausgelassen werden.

Zudem sind auch Kombinationen aus mehrfarbigen ober- und unterseitigen Beschichtungen möglich.

Die Erfindung betrifft des Weiteren ein beschichtetes Glas-oder Glaskeramiksubstrat, welches wie vorstehend beschrieben, herstellbar ist.

Durch die Erfindung konnte eine glänzende Beschichtung bereitgestellt werden, welche insbesondere mit einem Glanzgrad von G1 nach EN ISO 2813 glänzt. Es versteht sich, dass als Unterseitenbeschichtung der Glanzgrad von der Substratseite aus gesehen herangezogen wird.

### Beschreibung der Zeichnungen:

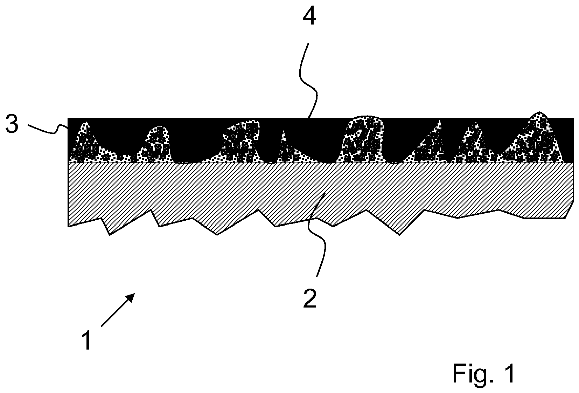

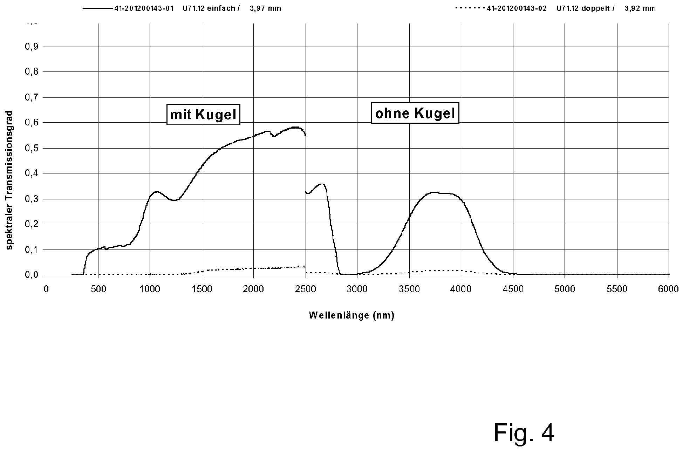

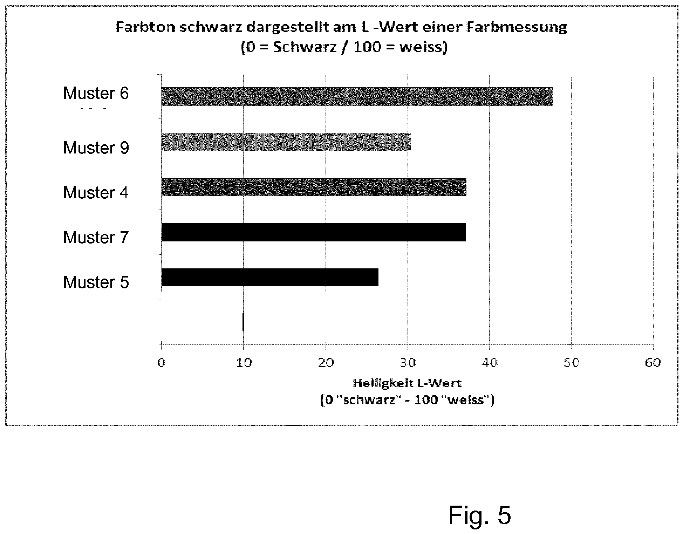

Die Erfindung soll im Folgenden Bezug nehmend auf die Zeichnungen Fig. 1 - Fig. 14 näher erläutert werden.

Fig. 1 zeigt eine schematische Schnittansicht, die zur Illustration des Effektes der Erfindung dient.

Zu sehen ist ein beschichtetes Glas- oder Glaskeramiksubstrat 1, welches aus dem Substrat 2 und einer Gradientenschicht besteht.

Die Gradientenschicht umfasst eine mittels Glasfluss aufgebrachte erste Schicht 3, die über 60 % Pigmentpartikel und kleinere Füllstoffpartikel enthält.

Aufgrund der vorhandenen Pigmentpartikel, welche zufällig angeordnete Täler und Berge ausbilden, entsteht eine strukturierte Oberfläche, welche mit einer Polysiloxanschicht als weitere Schicht 4 aufgefüllt ist. Auch die weitere Schicht 4 enthält Pigmentpartikel. Die Gradientenschicht wird als Unterseitenbeschichtung verwendet, das heißt, der Betrachter blickt von der den Schichten 3 und 4 gegenüberliegenden Seite auf die Gradientenschicht.

Die Gradientenschicht ist vorzugsweise schwarz und glänzend.

Im Detail können Schichten, wie in folgenden Beispielen beschrieben, aufgebracht werden.

Als Schichtmaterial für die erste Schicht wird eine Zusammensetzung gemäß Komponente A und für die weitere Schicht eine Zusammensetzung gemäß Komponente B verwendet.

Als Matrixmaterial der Komponente A können insbesondere kristalline und/ oder glasige anorganische Materialien verwendet werden.

Bevorzugt können diese Grundgläser silikatischen Ursprungs sein, wie z.B. Borosilikatgläser, Quarzgläser, Zinksilikatgläser,Zink-Borosilikatgläser, Bismut-Silikatgläser, Bismut-Borosilikatgläser, Alumosilikatgläser, Kalk-Natron-Gläser oder auch Borat-, Zink-Borat-, Bismut-Borat- oder Phosphatgläser sein sowie Invertgläser.

Dies können beispielsweise Gläser folgender Zusammensetzung sein:

**Borosilikatglas:**

| | |
|---|---|
| SiO₂: | 45-85 gew.% |
| B₂O₃: | 5-30 gew.% |
| Al₂O₃: | 2-20 gew% |
| R₂O: | 2-20 gew.% , wobei R₂O Alkalioxide sind |
| RO: | 0-10 gew.%, wobei RO Erdalkalioxide sind |
| RO₂: | 0- 5 gew%, wobei RO₂ TiO₂ und/oder ZrO₂ sind |
| ZnO: | 0-15 gew.% |

**Zinkboratgläser:**

| | |
|---|---|
| SiO₂: | 10-45 gew.% |
| B₂O₃: | 5-30 gew.% |
| Al₂O₃: | 0-10 gew% |
| R₂O: | 0-10 gew.% , wobei R₂O Alkalioxide sind |
| RO: | 0-25 gew.%, wobei RO Erdalkalioxide sind |
| RO₂: | 0-10 gew%, wobei RO₂ TiO₂ und/oder ZrO₂ sind |
| ZnO: | 10-70 gew.% |

Ein beschichtetes Glas oder Glaskeramiksubstrat kann im Detail unter Bezugnahme auf folgende Beispiele hergestellt werden:

### Beispiel 1:

Auf eine transparente Glaskeramikplatte vom Typ CERAN CLEARTRANS® (Größe 250 x 300 mm, Dicke 4 mm) wird auf die Unterseite die Komponente A vollflächig mittels Siebdruck (Gewebestärke 180)aufgetragen und bei 725°C/10 min im Durchlaufofen eingebrannt. Die Komponente A besteht zu 35 % aus Zink-Borosilikatglas (Erweichungstemperatur E_{w} 575°C) und zu 65% aus einem Schwarzpigment (Cu-Cr-Spinell; CuCr₂O₄), beide Komponenten haben eine Korngröße D50 < 5 µm.

Die so eingebrannte Komponente A hat eine Schichtdicke von 1,8 µm, ist haptisch glatt, dicht und nicht porös (ein eingetrockneter Wassertropfen kann abgewischt werden), grau (Ergebnisse der Farbmessgerätes Datacolor: L=29,9; a= -0,4; b= 0,4) und semitransparent (Transmission bei 550 nm: 11%).

Um die Streuung der Schicht zu ermitteln, wurde eine Probe im Spektrometer "Lambda 900" von der Firma Perkin Ellmer mit und ohne Ulbricht-Kugel gemessen. Bei einer Wellenlänge von 550 nm betrug die Transmission mit Ulbricht-Kugel 11% und 1% ohne Kugel, d.h. die Probe hat einen hohen Streulichtgrad.

Anschließend wird Komponente B1, aus der die weitere Schicht ausgebildet wird, ebenfalls vollflächig auf die Komponente A mittels Siebdruck aufgetragen.

Als Komponente B1 wird eine schwarze Silikonfarbe verwendet, beispielsweise beschrieben in der Offenlegungsschrift DE 10 2010 031 866 A1. Diese wird mit einem Siebgewebe der Stärke 77aufgedruckt und anschließend bei 200°C/45 min getrocknet.

Die so erhaltene Komponente B1 hat eine Schichtdicke von 11 µm und ist einzeln gedruckt grau (L= 30,8; a= -0,25; b=-1,2) .

Die erhaltene Gradientenschicht aus Komponente A und Komponente B1 hingegen ist glatt, dicht, tief-schwarz (L= 26,7; a= -0,1; b=-0,7) und glänzend bei Betrachtung durch die Glaskeramik (d.h. von der Oberseite betrachtet); die Transmission im gesamten VIS-Bereich beträgt 0% (Transmissionsmessung mit und ohne Ulbricht-Kugel). Mit dem Spektrometer "Lambda 950" von der Firma Perkin Ellmer wurde die Einzelschicht aus Komponente A als auch die Gradientenschicht aus Komponente A und B1 in Reflexion gemessen. Der Unterschied der Haze-Werte beträgt 5,5%, d.h. die Reflexionsmessung bestätigt, dass die Schicht aus Komponente A ein hohes Streuvermögen aufweist, während der Gradientenverbund nahezu kein Streuverhalten aufweist.

Die so hergestellte Gradientenschicht, bestehend aus den Materialien der Komponenten A und B, erfüllt die Anforderungen an eine Kochplatte mit einer kurzzeitigen Temperaturbelastung von maximal 500°C.

Die Komponente B1 kann sich im Detail wie folgt zusammensetzen:

| | |
|---|---|
| 60 - 80 Gew.-% | Polydimethylsiloxan |
| 10 - 40 Gew.-% | Schwarzpigment, insbesondere aus der Gruppe (Cr, Fe) (Ni, Mn) -Spinell, Cu(Cr,Fe,Mn) ₂O₄-Spinell (black 28), Co(Cr, Fe) ₂O₄ (black 27) (Ni,Fe) (Cr,Fe)O₄ -Spinell (black 30), (Fe, Mn)₂O₃ (black 33), (Fe, Mn) (Fe, Mn)₂O₄-Spinell (black 26) oder (Cu, Cr)Oₓ (black 28) |
| 5 - 15 Gew.-% | Graphit mit einem D90-Wert zwischen 5 und 20 µm. (sowohl synthetisch als auch nicht synthetisch). |

### Beispiel 2:

Auf eine transparente Glaskeramikplatte vom Typ CERAN CLEARTRANS® (Größe 250 x 300 mm, Dicke 4 mm) wird auf die Unterseite die Komponente A vollflächig mittels Siebdruck aufgetragen und bei 750°C/ 15 min im Durchlaufofen eingebrannt.

Die Komponente A enthält 25 % Borosilikatglas (E_{w} ∼620°C) und 75% Schwarzpigment (Cu-Cr-Spinell), mit Korngrößen D50 < 5 µm.

Die so eingebrannte Komponente A hat eine Schichtdicke von 1,6 µm, ist haptisch glatt, dicht (nicht porös), dunkelgrau (L=30,8; a= -0,4; b= 0,2)und semitransparent.

Anschließend wird Komponente B2 ebenfalls vollflächig auf die Komponente A mittels Siebdruck (Gewebestärke 77)aufgetragen und bei 230°C/90 min getrocknet. Als Komponente B2 wird eine graue Silikonfarbe verwendet. Die erhaltene Gradientenschicht aus Komponente A und Komponente B2 ist glatt, dicht, blickdicht und dunkelgrau (L= 30,1; a=- 0,7; b=-0,8).

Die so hergestellte Platte mit der Gradientenschicht erfüllt die Anforderungen an eine Kochplatte mit einer kurzzeitigen Temperaturbelastung von maximal 500°C.

Die Komponente B2 kann im Detail wie folgt zusammengesetzt sein:

| | |
|---|---|
| 60 - 80 Gew.-% | Polydimethylsiloxan |
| 10 - 20 Gew.-% | Schwarzpigment, insbesondere aus der Gruppe (Cr, Fe) (Ni, Mn) -Spinell, Cu(Cr,Fe,Mn) ₂O₄-Spinell (black 28), Co(Cr, Fe) ₂O₄ (black 27) (Ni,Fe) (Cr,Fe)O₄ -Spinell (black 30), (Fe, Mn)₂O₃ (black 33), (Fe, Mn) (Fe, Mn)₂O₄-Spinell (black 26) oder (Cu, Cr)Oₓ (black 28) |
| 10 - 20 Gew. % | TiO₂ (Weißpigment) |
| 5 - 15 Gew.-% | Graphit mit einem D90-Wert zwischen 5 und 20 µm. (sowohl synthetisch als auch nicht synthetisch). |

### Beispiel 3:

Auf eine transparente Glaskeramikplatte vom Typ CERAN CLEARTRANS® (Größe 250 x 300 mm, Dicke 4 mm) wird auf die Unterseite die Komponente A vollflächig mittels Siebdruck (Gewebestärke 180)aufgetragen und anschließend getrocknet.

Die Komponente A besteht zu 90 % aus Borosilikatglas (E_{w} ∼755°C) und zu 10% aus einem Effektpigment (Fa. Merck, Typ Xirallic® - crystal Silver), versetzt mit Siebdruckmedium.

Anschließend wird Komponente B ebenfalls vollflächig auf die Komponente A mittels Siebdruck (Gewebestärke 140)aufgetragen und bei 825°C/10 min eingebrannt.

Die Komponente B besteht zu 30 % aus Zink-Borosilikatglas (E_{w} ∼575°C) und zu 70% aus einem Schwarzpigment (Fe-Ni-Cr-Spinell), Korngrößen D50 < 5 µm.

Als Komponente C (=B1) wird eine schwarze Silikonfarbe verwendet, wie in Bsp. 1 beschrieben.

Diese wird mit einem Siebgewebe der Stärke 77aufgedruckt und anschließend bei 230°C/45 min getrocknet. Die erhaltene Gradientenschicht aus Komponente A, B und C ist glatt, dicht und, von der Oberseite her betrachtet, schwarz mit Glitzereffekt.

Die Komponente A kann auch mit Borosilikatgläsern unterschiedlicher Zusammensetzung mit variierenden Gehalten an Effektpigmenten (z.B. 1-10%) hergestellt werden. Damit kann das optische Erscheinungsbild verändert werden, z.B. als schwarz mit Goldglitzer oder schwarz mit Edelstahlfarbglitzer.

Die so hergestellten Gradientenschichten erfüllen die Anforderungen an eine Kochplatte mit einer kurzzeitigen Temperaturbelastung von maximal 500°C.

### Beispiel 4:

Auf eine transparente Glaskeramikplatte vom Typ CERAN CLEARTRANS® (Größe 250 x 300 mm, Dicke 4 mm) wird auf die Unterseite eine Sol-Gel-Farbe (Herstellung in der Offenlegungsschrift WO2010/081531 A1 beschrieben) mit 25% Effekt-Pigment (Fa. Merck, Typ Iriodin®; Partikelgröße < 25 µm), per Siebdruck, Gewebestärke 140, in Form von geometrischen Mustern und Schriftzügen aufgedruckt, bei 150°C/10 min getrocknet, erhaltene Schichtdicke 8 µm. Anschließend wird die Gradientenschicht, wie in Bsp. 1 beschrieben, hergestellt.

Die so erhaltenen Platten sind von der Oberseite (Betrachterseite) tief-schwarz (L= 26,6; a= -0,2; b= -0,7) mit hellen, kontrastreichen Mustern, Markierungen und Schriftzügen (L=63; a= -1,7; b=2,1).

Die so hergestellten Platten erfüllen die Anforderungen an eine Kochplatte mit einer kurzzeitigen Temperaturbelastung von maximal 500°C.

### Beispiel 5:

Auf mehrere transparente Glaskeramikplatten vom Typ CERAN CLEARTRANS® (Größe 250 x 300 mm, Dicke 4 mm) wird auf die Unterseite die Komponente A vollflächig mittels Siebdruck (Gewebestärke 100) aufgetragen und bei 725°C/10 min eingebrannt.

Die Komponente A besteht zu 35 % aus Zink-Borosilikatglas (E_{w} ∼575°C) und zu 65% aus einem Weißpigment (TiO₂), mit Korngrößen D50 < 5 µm.

Die so eingebrannte Komponente A hat eine Schichtdicke von 3 µm, ist haptisch glatt, dicht (nicht porös), beige (L=63,69; a=-0,3; b=5,61) und semitransparent.

Anschließend werden auf verschiedene Platten die Komponente B1, B2 und B3 ebenfalls vollflächig auf die Komponente A mittels Siebdruck, mit einem Siebgewebe der Stärke 77aufgedruckt und anschließend bei 200°C/45 min getrocknet.

Die erhaltene Platte mit der Gradientenschicht aus Komponente A und Komponente B1 ist glatt, dicht und grau (L= 48; a= -2; b=-3) bei Betrachtung von der Oberseite; die erhaltene Platte mit der Gradientenschicht aus Komponente A und Komponente B2 ist glatt, dicht und hellgrau (beigegrau) (L= 59; a= -1,6; b=1,4). Die erhaltene Platte mit der Gradientenschicht aus Komponente A und Komponente B3 ist glatt, dicht und beige (deutlich blickdichter (weniger transparent) als Komponente A allein) (L= 69; a= -0,7; b=5,5). Die so hergestellten Platten mit den Gradientenschichten erfüllen die Anforderungen an eine Kochplatte mit einer kurzzeitigen Temperaturbelastung von maximal 500°C.

Die Komponente B3 kann im Detail wie folgt zusammengesetzt sein:

| | |
|---|---|
| 60 - 80 Gew.-% | Polydimethylsiloxan |
| 0 - 40 Gew. % | TiO₂ (Weißpigment) |
| 0 - 10% Gew, % | Effektpigment Iriodin |

### Beispiel 6:

Auf eine transparente Glaskeramikplatte vom Typ CERAN CLEARTRANS® (Größe 250 x 300 mm, Dicke 4 mm) wird auf die Unterseite die Komponente A vollflächig mittels Siebdruck aufgetragen und bei 880°C/30 min eingebrannt.

Die Komponente A besteht zu 70 % aus Borosilikatglas (E_{w} ∼820°C) und zu 30% aus einem Schwarzpigment (Cr-Fe-Ni-Mn-Spinell), Korngrößen D50 < 5 µm.

Die so eingebrannte Komponente A hat eine Schichtdicke von 4,2 µm, ist haptisch glatt, dicht, nicht porös, grau (L=33,1; a= -1; b= -0,9) und semitransparent. Anschließend wird Komponente B1 ebenfalls vollflächig auf die Komponente A mittels Siebdruck (Gewebestärke 77) aufgetragen und bei 200°C/90 min getrocknet. Die erhaltene Gradientenschicht aus Komponente A und Komponente B1 ist glatt, dicht, schwarz (L=27,5; a=-0,2; b=-0,9)und glänzend.

Unter Umständen kann es vorkommen, dass ein Klebewulst, der auf die Unterseite aufgetragen wird, von der Oberseite her sichtbar ist. Daher kann auch zuerst die Komponente A von Beispiel 1 aufgebracht werden und anschließend die Schichten nach Beispiel 6 aufgetragen werden.

### Beispiel 7:

Auf eine transparente, nicht keramisierte Glasplatte vom Typ CERAN CLEARTRANS® (Größe 250 x 300 mm, Dicke 4 mm) wird auf die Unterseite die Komponente A vollflächig mittels Siebdruck (Gewebestärke 180) aufgetragen. Die Komponente A besteht zu 55 % aus Borosilikatglas (E_{w}∼820°C) und zu 45% aus einem Schwarzpigment (Cr-Fe-Ni-Mn-Spinell), Korngrößen D50 < 5 µm, versetzt mit Siebdruckmedium.

Während der Keramisierung des Substrates wird die Komponente A gleichzeitig mit eingebrannt, die dann eine Schichtdicke von 1,4 µm hat, haptisch glatt, dicht, nicht porös, grau und semitransparent ist.

Anschließend wird Komponente B1 ebenfalls vollflächig auf die Komponente A mittels Siebdruck (Gewebestärke 77) aufgetragen. und bei 200°C/90 min getrocknet. Die erhaltene Gradientenschicht aus Komponente A und Komponente B1 ist glatt, dicht und schwarz glänzend.

### Beispiel 8 (Vergleichsbeispiel):

Auf eine transparente Glaskeramikplatte vom Typ CERAN CLEARTRANS® (Größe 250 x 300 mm, Dicke 4 mm) wird auf die Unterseite die Komponente B1 vollflächig mittels Siebdruck (Gewebestärke 77) aufgetragen und anschließend bei 200°C/90 min getrocknet. Die so erhaltene Komponente B1 hat eine Schichtdicke von 20 µm und ist dunkelgrau-schwarz. Wenn diese Platte einer Temperaturbelastung von 500°C ausgesetzt wird, verfärbt sie sich (wird heller). Es entstehen massive Risse in der Silikonschicht, an denen das Licht stärker gestreut wird. Der so erhaltene Farbunterschied zwischen der unbeschädigten Silikonschicht und der durch Temperatureinwirkung geschädigten Silikonschicht ist nicht akzeptabel, d.h. die Anforderungen an eine Kochplatte werden nicht erfüllt. Als Einschicht-Beschichtung ist das Material der Komponente B1 mithin nicht geeignet.

### Beispiel 9:

Auf eine transparente Glaskeramikplatte vom Typ CERAN CLEARTRANS® (Größe 250 x 300 mm, Dicke 4 mm) wird auf die Unterseite die Komponente A vollflächig mittels Siebdruck (Gewebestärke 140) aufgetragen und bei 725°C/10 min eingebrannt. Die Komponente A besteht zu 40 % aus Zink-Borosilikatglas (E_{w}∼575°C) und zu 30% aus einem Blaupigment (Co-Al-Cr-Spinell) und zu 30% Grünpigment (Co-Zn-Ti-Cr-Spinell), Korngrößen D50 < 5 µm.

Die so eingebrannte Komponente A hat eine Schichtdicke von 2,1 µm, ist haptisch glatt, dicht und nicht porös, türkis und semitransparent.

Anschließend wird Komponente B2, aus der die weitere Schicht ausgebildet wird, ebenfalls vollflächig auf die Komponente A mittels Siebdruck aufgetragen.

Als Komponente B2 wird eine graue Silikonfarbe verwendet. Diese wird mit einem Siebgewebe der Stärke 54aufgedruckt und anschließend bei 230°C/45 min getrocknet.

Die erhaltene Gradientenschicht aus Komponente A und Komponente B2 ist glatt, blickdicht türkis und glänzend.

Die so hergestellte Gradientenschicht, bestehend aus den Materialien der Komponenten A und B2, erfüllt die Anforderungen an eine Kochplatte mit einer kurzzeitigen Temperaturbelastung von maximal 500°C.

### Beispiel 10:

Auf ein hitzebeständiges Borosilikatglas vom Typ Borofloat 33 mit einer Dicke von 3 mm wird auf die Unterseite die Komponente A vollflächig mittels Siebdruck (Gewebe 100-40) aufgetragen. Die Komponente A besteht zu 40 % aus Bismut-Borosilikatglas (E_{w}∼ 600°C) und zu 60% aus einem Schwarzpigment (Cu-Cr-Spinell). Der Einbrand erfolgt bei 680°C für 10 min.

Die erhaltene Schicht ist fast schwarz, dicht und hat eine Schichtdicke von 3,4 µm.

Als Komponente B1 wird eine schwarze Silikonfarbe verwendet, beispielsweise beschrieben in der Offenlegungsschrift DE 10 2010 031 866 A1. Diese wird mit einem Siebgewebe der Stärke 77 aufgedruckt und anschließend bei 200°C/45 min getrocknet.

Die erhaltene Gradientenschicht aus Komponente A und Komponente B1 ist glatt, dicht und schwarz-glänzend.

### Beispiel 11:

Bei den genannten Beispielen wurden auch Substrate mit der semitransparenten Komponente A gedruckt und eingebrannt. Anschließend wurde die eine Hälfte des Substrates blickdicht hinterdruckt (wie in den vorherigen Beispielen beschrieben) und die andere Hälfte mit transparentem, pigmentfreiem Silikonharz hinterdruckt und anschließend getrocknet. Die Displayanzeige unterhalb der Platte ist auch mit der transparenten Hinterdruckung im ausgeschalteten Zustand nicht sichtbar, aber im eingeschalteten Zustand ist die Anzeige gut lesbar.

Um den Farbkontrast zwischen dem blickdichten Teil und dem semitransparenten Displaybereich so gering wie möglich zu halten, wurde das transparente Silikonharz auch mit organischen Farbstoffen eingefärbt, z.B. bei Beispiel 1 mit dem schwarzen Farbstoff Orasol® RLi oder bei Beispiel 9 mit Farbstoffen auf Phthalocyanin-Basis.

### Weitere Ausführungsmöglichkeiten:

Für Anwendungen z.B. als Kochplatte kann neben der Unterseite auch die Oberseite dekoriert sein.

Die Erfindung konnte eine tiefschwarze Beschichtung mit hoher Temperaturbeständigkeit bereit stellen, welche aus den Komponenten A (1. Schicht) und B (weitere Schicht) besteht.

Insbesondere wurden Schichten mit folgenden Farbwerten im Lab-Farbraum bereitgestellt:

| Schicht | L | a | B |
|---|---|---|---|
| Komponente A | 29,9 | -0,4 | 0,4 |
| Komponente B | 30,8 | -0,25 | -1,2 |
| A+B | 26,7 | -0,1 | -0,7 |

Zu erkennen ist insbesondere, dass die Helligkeit L des Schichtsystems aus den Komponenten A und B bei weniger als 27 liegt, wohingegen Komponente A allein aufgebracht eine Helligkeit von 29,9 und Komponente B eine Helligkeit von 30,8 aufweist. Mithin resultiert erst die Kombination der beiden Komponenten, aus denen die erste Schicht und die weitere Schicht bestehen, in einem tiefschwarzen Farbeindruck.

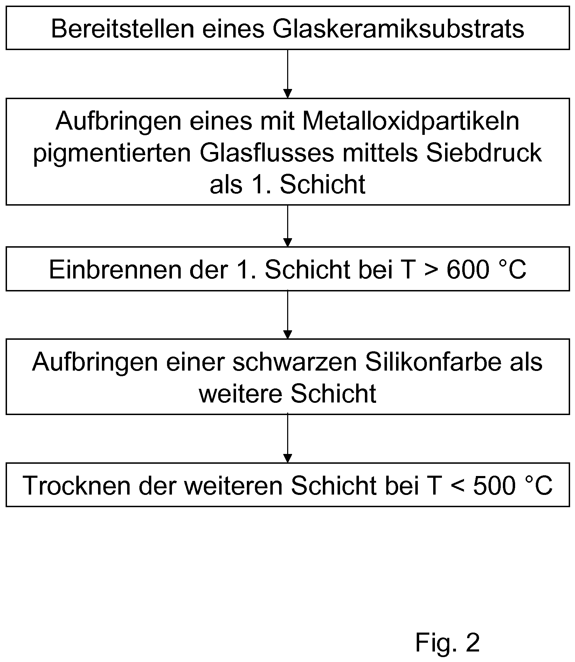

Fig. 2 zeigt ein schematisches Flussbild der wesentlichen Verfahrensschritte.

Zunächst wird ein Glaskeramiksubstrat bereitgestellt, sodann wird eine erste Schicht aufgebracht, welche aus einem Schichtmaterial besteht, das Metalloxydpartikel zur Pigmentierung sowie ein Glasflussmaterial enthält.

Diese erste Schicht wird bei einer Temperatur von über 600 °C eingebrannt, so dass eine dichte strukturierte Schicht entsteht.

Sodann wird als weitere Schicht eine schwarze Silikonfarbe aufgebracht. Diese Silikonfarbe wird bei einer Temperatur von unter 500 °C getrocknet.

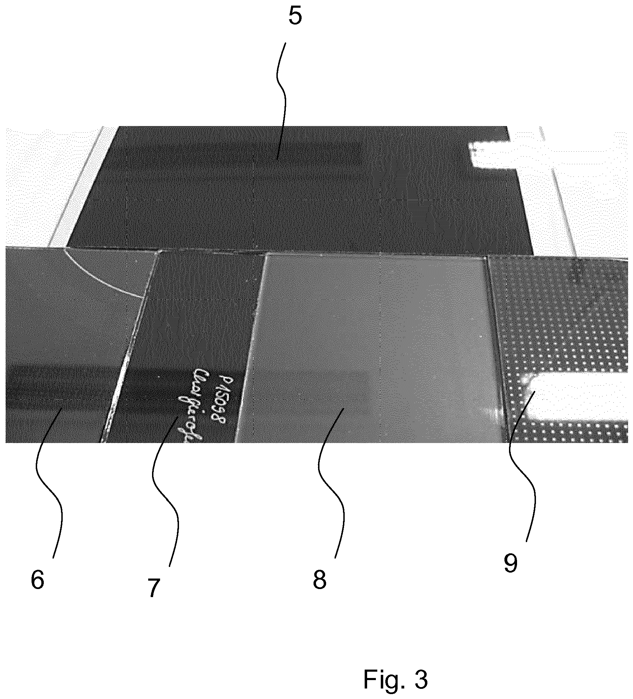

Fig. 3 zeigt Lichtbilder verschiedener Muster beschichteter Glaskeramiksubstrate. Bei den Mustern 6, 8 und 9 handelt es sich um beschichtete Glaskeramiksubstrate mit einer dunklen Beschichtung, wie sie auf dem Markt verfügbar sind.

Zu erkennen ist, dass der optische Eindruck eher ins Graue geht.

Muster 7 ist mit einem Edelmetalloxyd beschichtet. Zu erkennen ist ein braun-schwarzer Farbeindruck. Allerdings ist das Aufbringen einer derartigen Beschichtung sehr teuer.

Muster 5 ist mit einem Verfahren gemäß der Erfindung beschichtet.

Zu erkennen ist ein tiefschwarzer Farbeindruck. Weiter hat die Beschichtung einen glänzenden, spiegelnden Farbeindruck.

Fig. 4 zeigt den spektralen Transmissionsverlauf eines mit Komponente A beschichteten Glaskeramiksubstrats gemäß Ausführungsbeispiel 1 der Erfindung.

Zu erkennen ist, dass im sichtbaren Bereich der spektrale Transmissionsgrad bei weniger als 20 % liegt.

Fig. 5 zeigt eine Darstellung des Helligkeitswertes (L-Wert) im Lab-System der in Fig. 3 dargestellten Muster.

Zu erkennen ist, dass das Muster 5, also die erfindungsgemäß aufgebrachte Beschichtung den niedrigsten L-Wert hat, welcher sogar noch unter dem L-Wert des Musters 7 liegt, bei dem ein Edelmetalloxyd aufgebracht wurde.

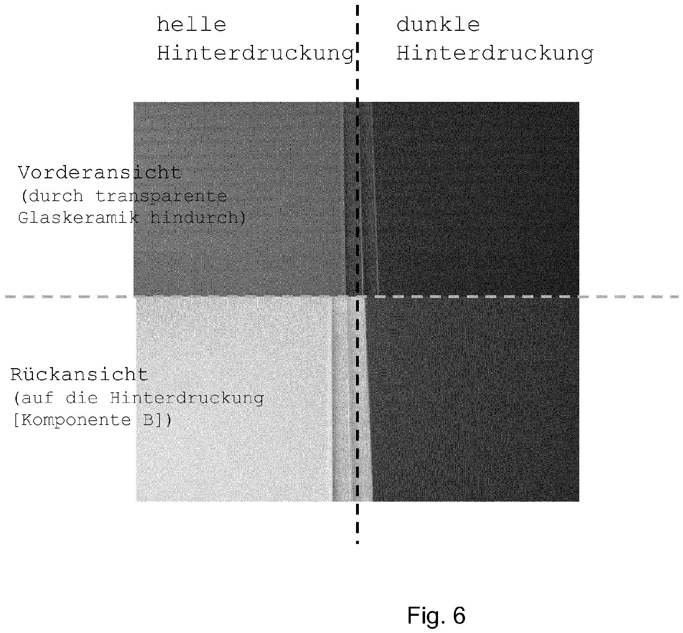

Bezug nehmend auf Fig. 6 soll die Farbortveränderung durch verschiedenfarbige Hinterdruckungen erläutert werden.

Komponente A ist in diesem Beispiel dunkel pigmentiert.

Zu erkennen ist, dass bei einer Verwendung als Unterseitenbeschichtung (Vorderansicht) mit der hell pigmentierten Komponente B2 ein grauer Farbeindruck entsteht.

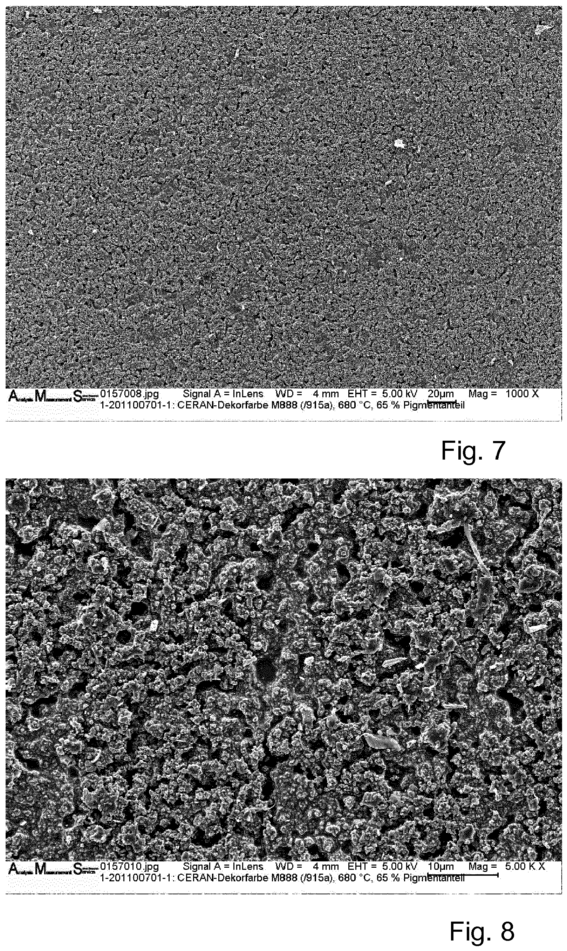

Fig. 7 bis Fig. 10 zeigen rastermikroskopische Aufnahmen eines glasflussbasierten Beschichtungsmaterials für die erste Schicht, welches bei 680 °C eingebrannt wurde.

Zu erkennen ist eine stark strukturierte Schicht, die aufgrund der zugesetzten Partikel gezielt den gewünschten starken Strukturierungsgrad aufweist.

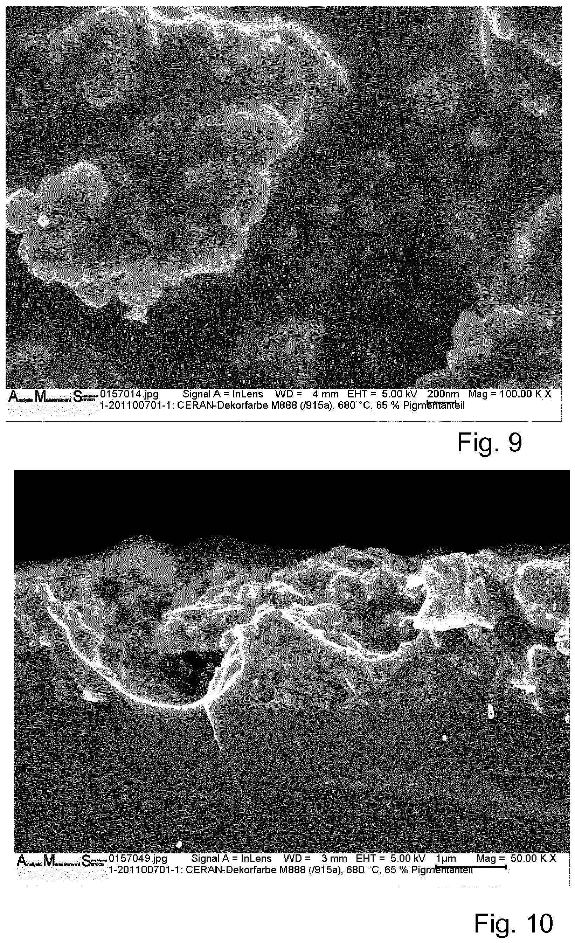

Fig. 9 zeigt eine Aufnahme mit, gegenüber dem in Fig. 7 und Fig. 8 dargestelltem Maßstab, starker Vergrößerung.

In Fig. 9 ist eine Rissbildung in der eingebrannten Schicht zu erkennen. Überraschenderweise hat sich gezeigt, dass diese Rissbildung keinen nennenswert sichtbaren Einfluss auf die optische Anmutung der Schicht hat, wenn diese mit einer weiteren Schicht versehen ist, die die Struktur der ersten Schicht auffüllt.

Weiter scheint die Rissbildung die Temperaturstabilität des Schichtsystems sogar zu erhöhen.

Fig. 10 zeigt eine Schnittansicht der Schicht. Zu erkennen ist, wie das Substrat in die Beschichtung übergeht, auch die einzelnen Pigmentpartikel sind gut zu erkennen. Im Boden eines Tals ist eine deutliche Rissbildung zu erkennen.

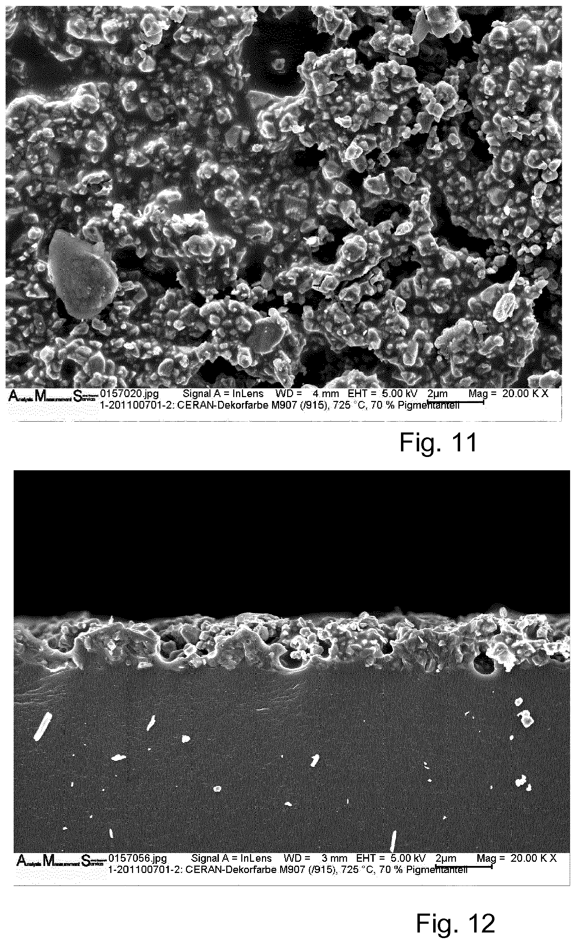

Fig. 11 und Fig. 12 zeigen rasterelektronenmikroskopische Aufnahmen einer ersten Schicht, welche 70 % Pigmentanteil aufweist und welche mit 725 °C eingebrannt wurde. Das Ergebnis ist in etwa vergleichbar, wobei die Strukturtiefe dieser Schicht weiter zunimmt.

In der Schnittansicht gemäß Fig. 12 ist besonders gut zu erkennen, dass die Schicht nahezu porenfrei ist. Das Schichtmaterial selbst hat mithin eine sehr geringe Porosität nach dem Einbrand.

Die erste Schicht sollte derart schnell eingebrannt werden, dass die Entstehung einer porösen Struktur aufgrund der zugesetzten Partikel weitgehend vermieden wird.

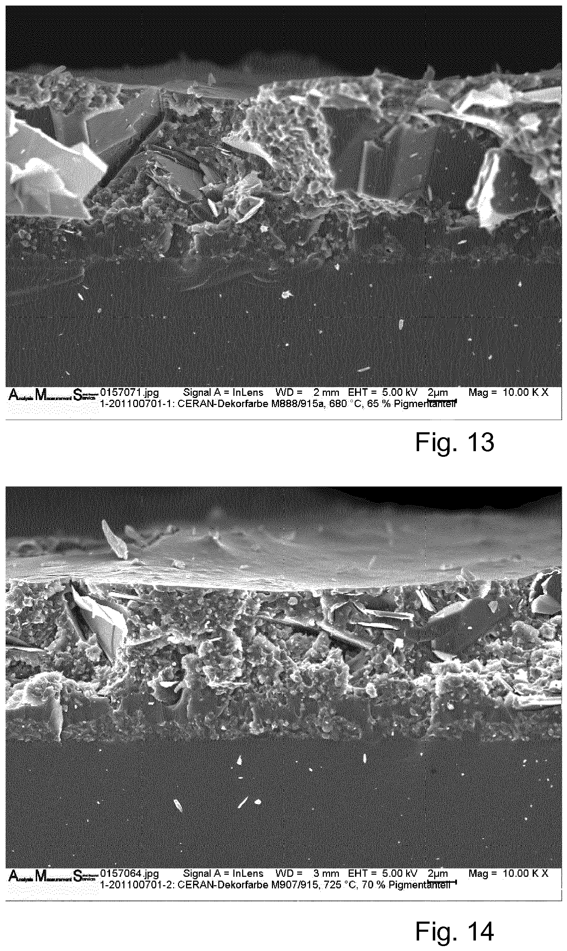

Fig. 13 und Fig. 14 zeigen rasterelektronenmikroskopische Schnittansichten eines Schichtmaterials, welches mit einer Silikonfarbe als zweite Schicht aufgefüllt wurde.

Fig. 13 bezieht sich dabei auf die mit 680 °C eingebrannte erste Schicht mit 65 % Pigmentanteil und Fig. 14 auf die bei 725 °C eingebrannte erste Schicht mit 70 % Pigmentanteil.

Zu erkennen ist, dass in den rasterelektronenmikroskopischen Aufnahmen die erste Schicht versiegelt ist und eine recht glatte Oberfläche vorhanden ist.

Des Weiteren lassen sich in dieser rastermikroskopischen Aufnahme die Bestandteile der ersten und weiteren Schicht kaum unterscheiden, das Material geht graduell ineinander über.

Durch die Erfindung können hochtemperaturstabile farbige Dekorbeschichtungen für Kochfelder auf besonders einfache und preiswerte Weise hergestellt werden.

## Patentansprüche

1. Verfahren zum Aufbringen einer dekorativen Beschichtung auf ein Glas- oder Glaskeramiksubstrat, umfassend die Schritte:
- Aufbringen einer ersten Schicht mit einer strukturierten Oberfläche, wobei die erste Schicht als Glasfluss aufgebracht wird und wobei zum Erreichen der strukturierten Oberfläche dem für die erste Schicht verwendetem Material Pigment- und/oder Füllstoffpartikel zugesetzt werden, wobei die erste Schicht eingebrannt wird, wobei Glasflusspartikel schmelzen, Pigment- und/oder Füllstoffpartikel erhalten bleiben, wobei die maximale Strukturtiefe der ersten Schicht mehr als 40 % der maximalen Schichtdicke beträgt,
- Aufbringen einer weiteren Schicht auf die erste Schicht mit der strukturierten Oberfläche, wobei die weitere Schicht die strukturierte Oberfläche zumindest teilweise auffüllt, so dass das Material der ersten Schicht graduell zum Material der zweiten Schicht übergeht und wobei das Material der zweiten Schicht Pigmente oder Farbstoffe umfasst,
wobei als zweite Schicht eine zumindest teilweise polymere Schicht aufgebracht wird.

2. Verfahren zum Aufbringen einer dekorativen Beschichtung nach dem vorstehenden Anspruch, **dadurch gekennzeichnet, dass** Pigment- und/oder Füllstoffpartikel durch den Glasfluss eingebettet werden.

3. Verfahren zum Aufbringen einer dekorativen Beschichtung auf ein Glas- oder Glaskeramiksubstrat nach dem vorstehenden Anspruch, **dadurch gekennzeichnet, dass** das Material der ersten und/oder zweiten Schicht Pigmente zu einem Anteil von mehr als 50 % umfasst und/oder dass zumindest die erste Schicht Metalloxydpartikel als Pigment und ein weiteres anorganisches Material, insbesondere ein Glas, umfasst und/oder dass zumindest die erste Schicht mit Pigmentpartikel mit einer mittleren Partikelgröße von mehr als 0,05 µm, bevorzugt mehr als 0,25 µm, umfasst.

4. Verfahren zum Aufbringen einer dekorativen Beschichtung auf ein Glas- oder Glaskeramiksubstrat nach einem der vorstehenden Ansprüche, **dadurch gekennzeichnet, dass** als zweite Schicht ein Polysiloxan, Polysilsesquioxan, Polyurethan, epoxyfunktionalisiertes Silikonharz, polyesterfunktionalisiertes Silikonharz und/oder ein Sol-Gel aufgebracht wird.

5. Verfahren zum Aufbringen einer dekorativen Beschichtung auf ein Glas- oder Glaskeramiksubstrat nach einem der vorstehenden Ansprüche, **dadurch gekennzeichnet, dass** die erste Schicht bei einer derart hohen Temperatur eingebrannt wird, dass Risse entstehen.

6. Verfahren zum Aufbringen einer dekorativen Beschichtung auf ein Glas- oder Glaskeramiksubstrat nach einem der vorstehenden Ansprüche, **dadurch gekennzeichnet, dass** eine erste Schicht mit einer maximalen Strukturtiefe von 0,1 bis 5 µm, bevorzugt von 0,2 bis 3 µm und besonders bevorzugt von 0,5 bis 2 µm, aufgebracht wird und/oder dass die maximale Strukturtiefe der ersten Schicht mehr als 80 % und bevorzugt mehr als 90 % der maximalen Schichtdicke beträgt.

7. Verfahren zum Aufbringen einer dekorativen Beschichtung auf ein Glas- oder Glaskeramiksubstrat nach einem der vorstehenden Ansprüche, **dadurch gekennzeichnet, dass** als erste Schicht eine Schicht mit einer geschlossenen Porosität von weniger als 30 %, vorzugsweise weniger als 10 %, besonders bevorzugt von weniger als 5% aufgebracht wird, und/oder dass dem Material der zweiten Schicht Partikel, insbesondere Füllstoffpartikel, zugesetzt werden, und/oder dass unter der ersten Schicht eine weitere strukturierte Schicht, insbesondere eine Sol-Gel-Schicht, aufgebracht wird.

8. Verfahren zum Aufbringen einer dekorativen Beschichtung auf ein Glas- oder Glaskeramiksubstrat nach einem der vorstehenden Ansprüche, **dadurch gekennzeichnet, dass** als erste und weitere Schicht Schichten aufgebracht werden, die, einzeln aufgebracht, eine Helligkeit L im Lab-Farbraum von mehr als 29,0 aufweisen, wobei die übereinander angeordneten Schichten eine Helligkeit L von weniger als 28,0 aufweisen.

9. Beschichtetes Glas- oder Glaskeramiksubstrat, herstellbar, insbesondere hergestellt mit einem Verfahren nach einem der vorstehenden Ansprüche.

10. Beschichtetes Glas- oder Glaskeramiksubstrat nach dem vorstehenden Anspruch, **dadurch gekennzeichnet, dass** in der ersten Schicht enthaltene Füllstoff- und/oder Pigmentpartikel in einen Glasfluss eingebettet sind.

11. Beschichtetes Glas- oder Glaskeramiksubstrat nach Anspruch 10, **dadurch gekennzeichnet, dass** die weitere Schicht abschnittsweise ausgespart ist und/oder dass die Beschichtung glänzt, insbesondere mit einem Glanzgrad von G1 nach EN ISO 2813.

12. Beschichtetes Glas- oder Glaskeramiksubstrat nach einem der vorstehenden Ansprüche, **dadurch gekennzeichnet, dass** das beschichtete Substrat schwarz ist.

13. Kochfläche umfassend ein beschichtetes Glas- oder Glaskeramiksubstrat nach einem der vorstehenden Ansprüche.

## Claims

1. A method for applying a decorative coating to a glass or glass ceramic substrate, comprising the steps of:
- applying a first layer having a textured surface, wherein the first layer is applied as a glass flux and wherein pigment and/or filler particles are added to the material used for the first layer to obtain the textured surface, wherein the first layer is baked whereby glass flux particles melt while pigment and/or filler particles remain intact, wherein the maximum texture depth of the first layer is more than 40 % of the maximum thickness of the layer;
- applying a further layer onto the first layer exhibiting the textured surface, wherein the further layer fills the textured surface at least partially, so that the material of the first layer gradually merges into the material of the second layer, and wherein the material of the second layer comprises pigments or colorants, wherein an at least partially polymeric layer is applied as the second layer.

2. The method for applying a decorative coating according to the preceding claim, **characterised in that** pigment and/or filler particles are embedded by the glass flux.

3. The method for applying a decorative coating to a glass or glass ceramic substrate according to the preceding claim, **characterised in that**
the material of the first and/or second layers comprises pigments in a proportion of more than 50 %; and/or that
at least the first layer comprises metal oxide particles as the pigment and a further inorganic material, in particular a glass; and/or that
at least the first layer comprises pigment particles having of a mean particle size of more than 0.05 µm, preferably more than 0.25 µm.

4. The method for applying a decorative coating to a glass or glass ceramic substrate according to any one of the preceding claims, **characterised in that** a polysiloxane, polysilsesquioxane, polyurethane, epoxy-functionalized silicone resin, polyester-functionalized silicone resin, and/or a sol-gel is applied as the second layer.

5. The method for applying a decorative coating to a glass or glass ceramic substrate according to any one of the preceding claims, **characterised in that** the first layer is baked at such a high temperature that cracks arise.

6. The method for applying a decorative coating to a glass or glass ceramic substrate according to any one of the preceding claims, **characterised in that**
the first layer applied with a maximum texture depth from 0.1 to 5 µm, preferably from 0.2 to 3 µm, and more preferably from 0.5 to 2 µm; and/or that
the maximum texture depth of the first layer is more than 80 % and preferably more than 90 % of the maximum thickness of the layer.

7. The method for applying a decorative coating to a glass or glass ceramic substrate according to any one of the preceding claims, **characterised in that**
a layer having a closed porosity of less than 30 %, preferably less than 10 %, most preferably less than 5 % is applied as the first layer; and/or that
particles are added to the material of the second layer, in particular filler particles; and/or that a further textured layer, in particular a sol-gel layer, is applied below the first layer.

8. The method for applying a decorative coating to a glass or glass ceramic substrate according to any one of the preceding claims, **characterised in that** layers are applied as the first and the further layer, which exhibit a lightness L in the Lab colour space of more than 29.0 when individually applied, wherein the superposed layers exhibit a lightness L of less than 28.0.

9. A coated glass or glass ceramic substrate that is producible, in particular produced by a method according to any one of the preceding claims.

10. The coated glass or glass ceramic substrate according to the preceding claim, **characterised in that** filler and/or pigment particles included in the first layer are embedded in a glass flux.

11. The coated glass or glass ceramic substrate according to claim 10, **characterised in that** the further layer is omitted in sections; and/or that
the coating is glossy, in particular having a gloss level G1 according to the EN ISO 2813 standard.

12. The coated glass or glass ceramic substrate according to any one of the preceding claims, **characterised in that** the coated substrate is black.

13. A cooktop, comprising a coated glass or glass ceramic substrate according to any one of the preceding claims.

## Revendications

1. Procédé d'application d'un revêtement décoratif sur un substrat en verre ou vitrocéramique, comprenant les étapes suivantes :
- application d'une première couche avec une surface structurée, sachant que la première couche est déposée sous forme de coulée de verre et que pour obtenir la surface structurée, on ajoute des particules de pigments et/ou de charges au matériau utilisé pour la première couche, la première couche étant soumise à une cuisson lors de laquelle des particules de la coulée de verre entrent en fusion et des particules de pigments et/ou de charges sont conservées, la profondeur de structure maximale de la première couche étant supérieure à 40 % de l'épaisseur maximale de la couche,
- application d'une couche supplémentaire sur la première couche avec la surface structurée, sachant que la couche supplémentaire remplit au moins partiellement la surface structurée, de sorte que le matériau de la première couche présente une transition progressive vers le matériau de la deuxième couche, et sachant que le matériau de la deuxième couche comporte des pigments ou des colorants, la deuxième couche appliquée étant au moins en partie une couche polymère.

2. Procédé d'application d'un revêtement décoratif selon la revendication précédente, **caractérisé en ce que** des particules de pigments et/ou de charges sont enrobées par la coulée de verre.

3. Procédé d'application d'un revêtement décoratif sur un substrat en verre ou vitrocéramique selon la revendication précédente, **caractérisé en ce que** le matériau de la première et/ou de la deuxième couche comprend des pigments en une proportion supérieure à 50 %, et/ou **en ce qu'**au moins la première couche comprend des particules d'oxyde métallique, en tant que pigment, et un autre matériau inorganique, en particulier un verre, et/ou **en ce qu'**au moins la première couche comprend des particules de pigments avec une grosseur de particule moyenne supérieure à 0,05 µm, de préférence supérieure à 0,25 µm.

4. Procédé d'application d'un revêtement décoratif sur un substrat en verre ou vitrocéramique selon l'une des revendications précédentes, **caractérisé en ce que** l'on applique comme deuxième couche un polysiloxane, un polysilsesquioxane, un polyuréthane, une résine silicone fonctionnalisée époxy, une résine silicone fonctionnalisée polyester et/ou un sol-gel.

5. Procédé d'application d'un revêtement décoratif sur un substrat en verre ou vitrocéramique selon l'une des revendications précédentes, **caractérisé en ce que** la première couche est soumise à la cuisson à une température qui est si élevée qu'elle provoque des fissures.

6. Procédé d'application d'un revêtement décoratif sur un substrat en verre ou vitrocéramique selon l'une des revendications précédentes, **caractérisé en ce que** l'on applique une première couche avec une profondeur de structure maximale comprise entre 0,1 et 5 µm de préférence entre 0,2 et 3 µm, et de façon particulièrement avantageuse entre 0,5 et 2 µm, et/ou **en ce que** la profondeur de structure maximale de la première couche est supérieure à 80 % et de préférence supérieure à 90 % de l'épaisseur maximale de la couche.

7. Procédé d'application d'un revêtement décoratif sur un substrat en verre ou vitrocéramique selon l'une des revendications précédentes, **caractérisé en ce que** l'on applique, en tant que première couche, une couche ayant une porosité fermée qui est inférieure à 30 %, de préférence inférieure à 10 %, et de façon particulièrement avantageuse inférieure à 5 %, et/ou **en ce que** l'on ajoute au matériau de la deuxième couche des particules, notamment des particules de charge, et/ou **en ce que** l'on applique sous la première couche, une autre couche structurée, notamment une couche sol-gel.

8. Procédé d'application d'un revêtement décoratif sur un substrat en verre ou vitrocéramique selon l'une des revendications précédentes, **caractérisé en ce que** l'on applique, en tant que première couche et en tant que couche supplémentaire, des couches qui, lorsqu'elles sont appliquées individuellement, présentent une luminosité L supérieure à 29,0 dans l'espace chromatique, sachant que les couches superposées présentent une luminosité L inférieure à 28,0.

9. Substrat en verre ou vitrocéramique doté d'un revêtement, pouvant être fabriqué et étant notamment fabriqué avec un procédé selon l'une des revendications précédentes.

10. Substrat en verre ou vitrocéramique doté d'un revêtement selon la revendication précédente, **caractérisé en ce que** des particules de charges et/ou de pigments contenues dans la première couche sont enrobées dans une coulée de verre.

11. Substrat en verre ou vitrocéramique doté d'un revêtement selon la revendication 10, **caractérisé en ce que** la couche supplémentaire est omise dans certaines zones, et/ou **en ce que** le revêtement est brillant, en particulier avec un taux de brillance de G1 selon EN ISO 2813.

12. Substrat en verre ou vitrocéramique doté d'un revêtement selon l'une des revendications précédentes, **caractérisé en ce que** le substrat revêtu est noir.

13. Plan de cuisson comprenant un substrat en verre ou vitrocéramique doté d'un revêtement selon l'une des revendications précédentes.
